# EUROPEAN PATENT APPLICATION

(11) **EP 1 624 593 A1**
(43) Date of publication of application: **08.02.2006**
(21) Application number: 04291995.1
(22) Date of filing: 05.08.2004
(51) Int. Cl.: H04B 10/08, H04B 10/207, G01M 11/00

(54) **Optical distribution network monitoring method and system**

(71) Applicant: ALCATEL, 75008 Paris (FR)
(72) Inventor: Schmuck, Harald, 71701 Schwieberdingen (DE); Pfeiffer, Thomas, Dr., 70569 Stuttgart (DE)
(74) Representative: Kohler Schmid Möbus

(57) **Abstract**

This invention relates to a method for monitoring a passive optical distribution network and a monitoring system of an optical distribution network comprising at least one passive distribution node 1 and optical fiber links 3,4 of a drop section 5 backwards said passive distribution node 1 and at least one optical fiber link 9 of a feeder section 11 up to said passive distribution node 1. The monitoring system is comprising at least one end user Optical Network Terminal 7,8 and at least one Optical Line Terminal 13, wherein the Optical Network Terminal 7,8 is comprising a transceiver 15 having transmitting means 17, being designed to send a first monitoring signal through an optical fiber link 3,4 of the drop section 5, and - receiving means 19, being designed to receive parts of the first monitoring signal reflected within said optical fiber link 3,4 of the drop section 5. The monitoring system, preferably the Optical Network Terminal 7,8, further is comprising failure detecting means 21, being designed to compare signal losses of said optical fiber link 3,4 of the drop section 5 calculated from a signal strength of said received parts of the first monitoring signal to a drop section fiber reference signal loss value and to decide whether a failure of said optical fiber link of the drop section has occurred depending of a result of the comparison.

## Description

This invention relates to an Optical Distribution Network (ODN) monitoring method and a monitoring system, being designed to carry out the steps of the monitoring method. An optical distribution network is comprising at least one passive distribution node and optical fiber links of a drop section backwards said passive distribution node and at least one optical fiber link of a feeder section up to said passive distribution node. The monitoring system is comprising at least one end user Optical Network Terminal (ONT) being connected to the optical fiber link of the drop section and at least one Optical Line Terminal (OLT) being connected to the optical fiber link of the feeder section.

Optical fiber transmission systems are very widespread today and support very high speed audio and video transmission. Due to the increased data traffic volumes that shall be supported, performance monitoring and management of networks become increasingly important. The need for reliable tools that are capable of detecting faults and detoriation of the physical carrier, i.e. of the optical fibers, is increasingly felt. During implementation of fiber plants as well as afterwards during the network operation it is necessary to apply a method to check the optical line condition, since a quick detection and identification of fiber link failures can help to minimise service downtime for the user and any loss of revenue to the network operator (provider).

As more fibers are deployed in metropolitan and access networks there is an increasing need for continuously or at least regularly supervising the performance of the optical links. Supervision enables preventive countermeasures in case of early detection of link degradations, thus securing a high availability of the network, e.g. for delivering critical services to business customers. Also in case of failures the introduction of supervising means helps to quickly localise and identify the cause of failure to initiate repair or restoration actions. The network operator needs to quickly identify the cause of a link failure, i.e. to decide between the fiber plant, i.e. the optical fibers (fiber link) themselves, and the node equipment and, in case of fiber problems, to localise and identify the type of fault or degradation along the fiber link. Most fiber link problems are related to increased losses and reflections that either prevent from error free detection of the data or that disturb the emitting laser, causing distortions of the transmitted data. Problems due to changes of the chromatic dispersion are unlikely due to the low data rates considered in access.

Within access networks beside point to point (p-t-p) links passive optical distribution systems (PON) are of great interest. PON technology represents a cost effective architecture for a local loop mainly by eliminating of complex and expensive active powered elements between a service provider and subscribers.

Continuous optical performance monitoring detecting and localising faults in PONs are preferable network features increasing the service availability and providing substantial cost savings to the providers. PON networks are based on Optical Distribution Networks where splitters are located in the field outside the Central Office (CO), meaning a network centre, where an Optical Line Terminal is connected to the feeder section of the ODN.
In p-t-p networks Optical Time Domain Reflectometry (OTDR) techniques are used to monitor the network, by launching an optical single pulse into a probe fiber link and measuring the reflected light enabling a characterisation of fiber optical links. In PON network at the central office side it is difficult to check the fiber link properties beyond a passive distribution node, i.e. a splitter, because all of the back scattered and reflections from all fiber link branches beyond the splitters are superimposed. The OTDR signal of each branch is partially masked by the signals of the others. Therefore the use of existing conventional OTDR techniques for optical performance monitoring like the single pulse method is not applicable in optical distribution networks.

There exist different proposals to overcome this problem by using conventional OTDR technique combined with additional complex and costly equipment within the network. Several counter-measures have been proposed for example in Francesco Caviglia, Valerio C.Di. Biase: "Optical maintenance in PONs" ECOC'98, 20-24. Sept. 1998, Madrid, Spain. Most of them are based on the use of the conventional OTDR technique combined with additional equipment within the network. This test equipment is located at the central office. For example a wavelength routing scheme by Wavelength Division Multiplex (WDM) devices set beside the PON splitters in combination with a tuneable OTDR are used. Therefore a different wavelength within the maintenance band is assigned to each fiber link branch of the optical network.
The different proposals to realise a performance functionality within PON networks result in a high complexity measurement set-up, located at the central office and/or at the fiber link section in the field where the light is split off. These approaches cause big technical effort and high costs.

The basic problem to use OTDR technique in PON is the measuring at the drop section, i.e. the fiber links after a splitter (drop fiber). According to the state of the art a higher dynamic range is required to locate events, i.e. occurring failures, on drop section fiber links and events cannot be unambiguously attributed to individual drop fibers. Conventional optical time domain reflectometers applied at central office side cannot enable the full monitoring functionality in PON systems: it is not possible to check the fiber link properties beyond the splitter because all of the back scattered and reflections from all the branches beyond the splitters are superimposed; the OTDR signal of each branch is partially masked by the signals of the others. In case of failure the received backscattered signal cannot be unambiguously attributed to one individual fiber link branch. In order to reduce maintenance costs conventional expensive OTDR are applied only at CO side. In PON systems this technique cannot be applied because individual branches cannot be selected and separately measured. Other methods use complex and costly additional equipment, i.e. tuneable optical light sources or WDM splitters within the network located at the central office and/or at the branch fiber section in the field where the light is split off. These approaches cause considerable technical effort and high costs.

It is therefore an object of the invention to provide a method for monitoring a passive optical distribution network and a monitoring system of a passive optical distribution network, which overcome the problems associated with the related art, in particular which enable the monitoring of each individual fiber link branch of the drop section of the passive optical distribution network.

The object concerning the method monitoring a passive optical distribution network is attained by the method defined in claim 1 and the object concerning monitoring system is attained by the system according to claim 5.

Further advantageous features of the invention are defined in the depending claims.

The inventive method for monitoring an Optical Distribution Network is comprising the steps of:
- sending a first monitoring signal, preferably an Optical Time Domain Reflectometry Signal, by transmitting means of a transceiver of an end user Optical Network Terminal through an optical fiber link of a drop section backwards a passive distribution node of said Optical Distribution Network,
- receiving parts of the first monitoring signal reflected within the optical fiber link of the drop section by receiving means of said end user Optical Network Terminal, and
- comparing signal losses of said optical fiber link of the drop section calculated from a signal strength of said received parts of the first monitoring signal to a drop section fiber reference signal loss value and deciding whether a failure of said optical fiber link of the drop section has occurred depending on a result of the comparison preferably by said end user Optical Network Terminal.

The reference signal loss value can be derived from former measurements, which have been specified as measurements of said optical fiber link of the drop section while the fiber link had no failure.

The inventive method is providing the capability of fiber link monitoring in Point to Many Point (p-t-mp)- distribution systems e.g. passive optical networks (PON), because any fiber link of the drop section can be monitored by the end user Optical Network Terminal connected to the fiber link. Therefore no superposition of reflected signal occurs. According to the invention an embedded fiber link monitoring of optical distribution networks like PONs is made possible. Particularly, the inventive method is advantageous for access networks showing short fiber links with only few components exhibiting only moderate losses so that the available optical powers and sensitivities of the transceivers are sufficient for the OTDR measurements.

The inventive method makes available a practical technical solution for PON networks. It is preferred to implement the intrinsic OTDR functionality within the transceivers at OLT side as well as at ONT side. It is also possible to perform the step of comparing signal losses and deciding whether a failure has occurred by a network centre.

The invention allows the monitoring of optical link performance in optical distribution systems from subscriber side for an individual testing of fiber link branches with reduced requirements for an OTDR dynamic range, wherein no increased dynamic range to overcome PON splitter losses is needed. A continuous optical performance monitoring detecting and localising of faults is a preferable network feature increasing the service availability and providing substantial cost savings to the providers.

Preferably, the inventive method further is comprising the steps of:
- sending a second monitoring signal, preferably an Optical Time Domain Reflectometry Signal, by transmitting means of a transceiver of an Optical Line Terminal through an optical fiber link of a feeder section up to said passive distribution node, and
- receiving parts of the second monitoring signal reflected within the Optical Distribution Network by receiving means of said Optical Line Terminal, are performed,

preferably wherein the step of comparing signal losses of said optical fiber link of the feeder section calculated from a signal strength of said received parts of the second monitoring signal to a feeder section fiber reference signal loss value and deciding whether a failure of said optical fiber link of the feeder section has occurred depending on a result of the comparison, is performed preferably by said Optical Line Terminal. Therefore the monitoring of the optical distribution network is performed from both sides, from the OLT and the ONT respectively. So the optical fiber link of the feeder section is monitored as well as optical fiber links of the drop section.

Advantageously, said parts of the first monitoring signal reflected within the optical fiber link of the drop section, received by said receiving means of said end user Optical Network Terminal and said received parts of the second monitoring signal are combined mathematically preferably by said Optical Line Terminal. The combining preferably is comprising a subtraction of the parts of the first monitoring signal from the parts of the second monitoring signal. Therefore a part of the parts of the second monitoring signal being reflected from e.g. a broken fiber link can be masked out and the broken fiber link can be pointed out. Furthermore, by knowing the individual branches from measurements from the subscriber sides such branches can be masked out from a measurement from the CO side and thus a disturbed individual line can be monitored from the CO side.

Preferably said result is transmitted from said end user Optical Network Terminal to an Optical Line Terminal by sending said result via an operational optical link of said Optical Distribution Network. Therefore the whole optical distribution network can be supervised by the Optical Line Terminal at CO side.

The inventive monitoring system is part of an optical distribution network comprising at least one passive distribution node and optical fiber links of a drop section backwards said passive distribution node and at least one optical fiber link of a feeder section up to said passive distribution node. The monitoring system is comprising at least one end user Optical Network Terminal and at least one Optical Line Terminal. The Optical Network Terminal is connected to an optical fiber link of the drop section and the Optical Line Terminal is connected to the optical fiber link of the feeder section. The Optical Network Terminal is comprising a transceiver having transmitting means, being designed to send a first monitoring signal through an optical fiber link of the drop section, and receiving means, being designed to receive parts of the first monitoring signal reflected within said optical fiber link of the drop section. The monitoring system, preferably the Optical Network Terminal, further is comprising failure detecting means, being designed to compare signal losses of said optical fiber link of the drop section calculated from a signal strength of said received parts of the first monitoring signal to a drop section fiber reference signal loss value and to decide whether a failure of said optical fiber link of the drop section has occurred depending on a result of the comparison.
The inventive monitoring system is being designed to perform the steps of the inventive method. Therefore it provides the advantages of the inventive method.

Very advantageously said Optical Line Terminal is comprising
- a transceiver having transmitting means, being designed to send a second monitoring signal through an optical fiber link of the feeder section, and
- receiving means, being designed to receive parts of the second monitoring signal reflected within the Optical Distribution Network,

and preferably
failure detecting means, being designed to compare signal losses of said optical fiber link of the feeder section calculated from a signal strength of said received parts of the second monitoring signal to a feeder section fiber reference signal loss value and to decide whether a failure of said optical fiber link of the feeder section has occurred depending on a result of the comparison.
Therefore the feeder section of the Optical Distribution Network can be monitored as well as the drop section of the Optical Distribution Network. So the whole Optical Distribution Network can be monitored by the inventive monitoring system.

Preferably said Optical Line Terminal is comprising analysing means, being designed to combine the parts of the first monitoring signal and said received parts of the second monitoring signal mathematically. Therefore different fiber link branches of the drop section can be masked out from the second monitoring signal to monitor these branches from CO side.

It is preferred that the monitoring system is being designed to transmit said result from said end user Optical Network Terminal to said Optical Line Terminal, wherein said transmitting means of the transceiver of said end user Optical Network Terminal are being designed to send said result via an operational optical link of said Optical Distribution Network. If only a minor failure has occurred in the fiber link being monitored, i.e. the fiber link is still operational, the fiber link can be used to transmit the result to the CO, where the user Optical Network Terminal is being located. So the whole optical distribution network can be supervised from CO side.

Preferably said transceiver of said Optical Network Terminal and/or said Optical Line Terminal is comprising an optical coupler, preferably a tap coupler, being designed to direct at least parts of received parts of a monitoring signal reflected within an optical fiber link to said receiving means, preferably wherein the receiving means are being designed to receive communication data. Therefore no supplementary receiving means have to be provided to perform the steps of the inventive method. A bi-directional operating transceiver usually used in PON networks can be used as a basis for the transceivers of the inventive system.

Advantageously, the optical coupler is comprising a partially transparent dielectric mirror. The dielectric layers of the mirror are designed to enable a slight transparency of the data transmission wavelength back to the receiver. So a part of the back scattered light is fed back into the receiver.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.
In figure 1 a passive optical distribution network comprising the inventive monitoring system is shown schematically.
In figure 2 a diagram for the optimisation of a wavelength selective coupler splitting ratio in dependence on the coupler ratio y is shown.

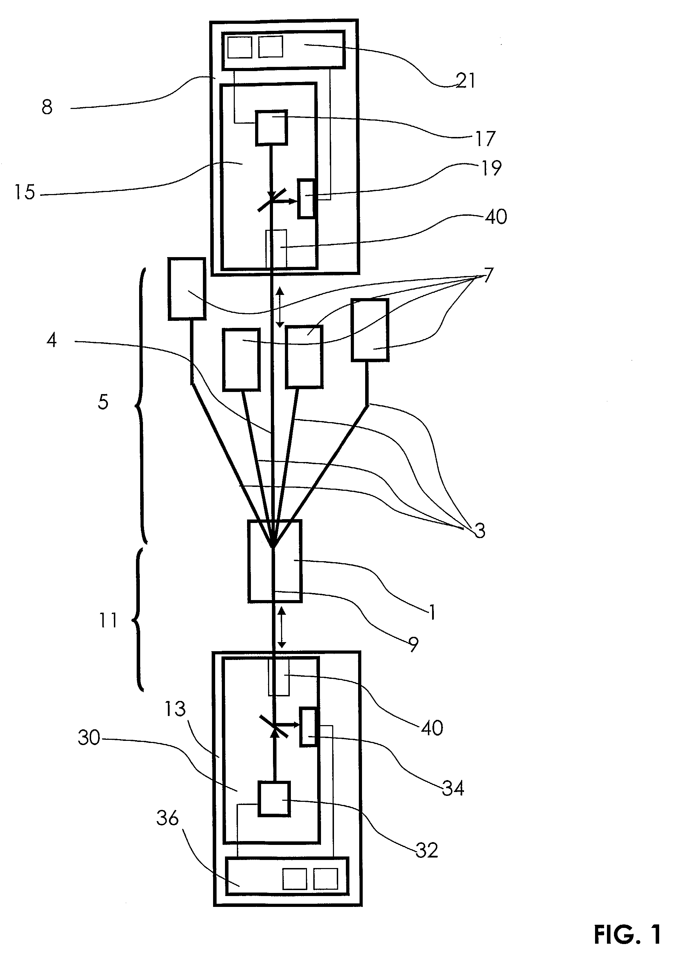

In figure 1 the inventive monitoring system is shown schematically. The monitoring system is part of an optical distribution network comprising a passive distribution node 1, e.g. an optical splitter, and optical fiber links 3,4 of a drop section 5 backwards said passive distribution node 1, meaning the range between the distribution node 1 and the Optical Network Terminals 7,8 (end user terminal), and an optical fiber link 9 of a feeder section 11 up to said passive distribution node 1. The monitoring system is comprising five end user Optical Network Terminals 7,8 and an Optical Line Terminal 13. Four of the ONTs 7 are only shown as single boxes for illustration purposes. The Optical Network Terminal 8 is comprising a transceiver 15 having transmitting means 17, being designed to send a first monitoring signal through an optical fiber link 4 of the drop section 5, and receiving means 19, being designed to receive parts of the first monitoring signal reflected within said optical fiber link 4 of the drop section 5. The Optical Network Terminals 8 further is comprising failure detecting means which are part of a processing unit 21. The failure detecting means are being designed to compare signal losses of said optical fiber link 4 of the drop section 5 calculated from a signal strength of said received parts of the first monitoring signal to a drop section fiber reference signal loss value and to decide whether a failure of said optical fiber link 4 of the drop section 5 has occurred depending on a result of the comparison. Also the Optical Line Terminal 13 is comprising a transceiver 30 having transmitting means 32, being designed to send a second monitoring signal through an optical fiber link 9 of the feeder section 11, and receiving means 34, being designed to receive parts of the second monitoring signal reflected within the Optical Distribution Network. In the inventive OTDR monitoring system within the PON system OTDR physical technology is embedded into the transceivers 15,30. Furthermore the Optical Line Terminal 13 is comprising failure detecting means as a part of a processing unit 36, being designed to compare signal losses of said optical fiber link 9 of the feeder section 11 calculated from a signal strength of said received parts of the second monitoring signal to a feeder section fiber reference signal loss value and to decide whether a failure of said optical fiber link 9 of the feeder section 11 has occurred depending on a result of the comparison. Also analysing means, being designed to combine the parts of the first monitoring signal and said received parts of the second monitoring signal mathematically can be part of the processing unit 36. The transceivers 15,30 of the Optical Network Terminal 8 and the Optical Line Terminal 13 each are comprising a tap coupler 40 as an optical coupler, being designed to direct at least parts of received parts of a monitoring signal reflected within an optical fiber link to said receiving means 19,34. The receiving means 19,34 are the same as those, which receive communication data, transmitted via the optical distribution network. Each of the optical couplers 40 are comprising a partially transparent dielectric mirror. By the aid of the optical couplers the parts, i.e. the back scattered parts, of the respective monitoring signal are led to the receiving means of the respective ONT or OLT.
Low-cost OTDR approaches re-use the data receiver inside the transceivers for the detection of the monitoring signal as said receiving means. A part of the backscattered OTDR light is coupled to the detector of the data receiver, e.g. by use of tap couplers in front of the receivers. PON networks usually represent single fiber solutions operating at two different wavelengths e.g. at 1.3 µm and 1.55 µm in up and down link. Therefore, at OLT and ONT bi-directional operating transceivers are implemented as shown. A wavelength separation is implemented by dielectric mirrors inside the transceivers. In the inventive monitoring system the wavelength of the measuring signal is equal to the wavelength of the data signal.

The range between the distribution node and the end user terminal is monitored by sending a monitoring signal from the transmitter of the end user terminal and building a signal path from the output of this terminal to the input of the terminal, in such a way that parts of the monitoring signal reflected within the distribution network are received and interpreted there. In the inventive monitoring system for optical performance in PON systems embedded OTDR physical technology is integrated into transceiver modules. Performance measurements are introduced from subscriber side in order to obtain a cost effective way to test the fiber link branches of the PON system individually. Preferably the measurements are carried out from CO side and subscriber side in parallel, for a supplementation when a failure, e.g. a break of one fiber link branch, occurs.
During failure-free network operation the monitoring is carried out from both sides. The ONTs will check the fiber links backwards up to the splitters. Every fiber branch is individually tested and the results are transferred via operational optical fiber links to the OLT side for further evaluation. The OLT monitors the optical feeder section up to the splitters. The required dynamic range of the OTDR inside each of the transceivers are strongly reduced compared to when the total network is controlled just from the OLT side. With cascaded splitters the fiber link between the splitters must also be monitored. For this section the attenuation is slightly higher due to the splitters than in the single splitter case discussed above, but it is still more efficient to do the monitoring from ONT and OLT side, rather than carrying it out only from the OLT side.

When a failure at a fiber branch occurs, a monitoring procedure based on the interaction of several transceivers is performed which depends on the kind of disturbance on the fiber:
- If an event (failure) occurs at an individual branch showing moderate losses the ONT is able to detect and localise the failure and reports it back to the OLT.
- The event will show a higher loss: it may be detectable (in case of high reflected light) from the OLT side.
- If a fiber is broken there is low reflection, so the OLT in interaction with the remaining ONTs can monitor the event and localise it by using reference data as well as by performing control measurements using the remaining ONTs, adapted to the individual fault situation. Numerical comparison of the different measurements will then allow to extract the information needed to localise the failure, i.e. a masking out of the signals is carried out by combining the measured signals mathematically.

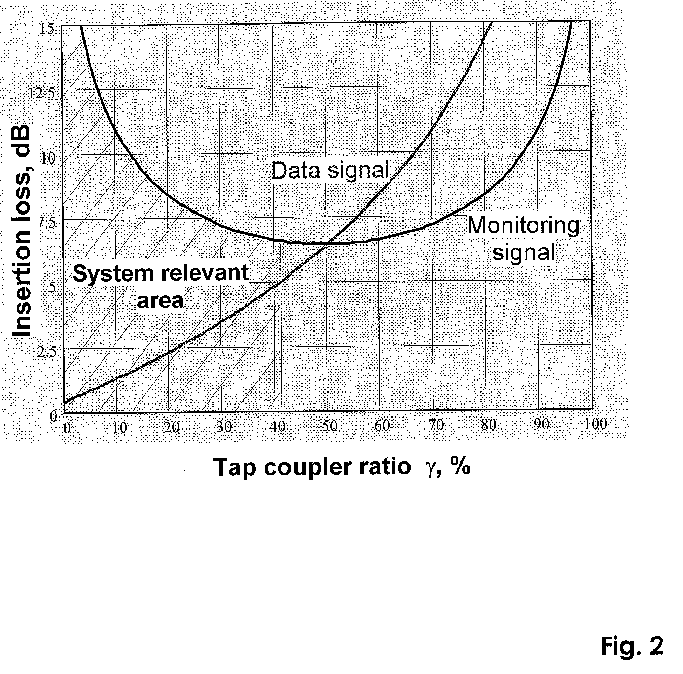

Figure 2 shows the insertion loss of the data signal and the monitoring signal in dependency of the tap coupler ratio □, defined as the ratio of the reflected parts of a signal through the tap coupler divided through the sum of the transmitted parts and the reflected parts. In order to feed a part of the back scattered light into the receiver the dielectric layers of the mirror are modified to enable a slight transparency of the data transmission wavelength back to the receiver. The detuning of the mirror causes a slight increase of the data signal insertion loss. The dependency of the degree of the re-coupled light by means of the tap coupler ratio □ and the resulting additional loss of the data signal can be discussed more in detail by figure 2. Here, the insertion loss of the data and monitoring signal in dependence of the chosen coupler ratio □ is depicted. The curves demonstrate the significant importance of the tap coupling degree deployed in the system which can be optimised and adapted to the network requirements. As shown in figure 2 a transmission system relevant area can be defined. On the one hand this area will be limited by 5 dB in maximum for the data signal path which represents a signal reduction to be tolerable in most transmission links. On the other hand insertion loss of <= 15 dB for the monitoring signal seems to be tolerable to get a sufficient Signal Noise Ratio (SNR) at the receiver.

For example a 1:10 coupling ratio o y leads to about 1.3 dB attenuation for the data and more than 21 dB for the reflection, respectively. Depending on the network conditions as well a 1:3 coupling ratio can be selected in order to decrease the attenuation of the reflection paths at the expense of the data path.

This invention relates to a method for monitoring a passive optical distribution network and a monitoring system of an optical distribution network comprising at least one passive distribution node 1 and optical fiber links 3,4 of a drop section 5 backwards said passive distribution node 1 and at least one optical fiber link 9 of a feeder section 11 up to said passive distribution node 1. The monitoring system is comprising at least one end user Optical Network Terminal 7,8 and at least one Optical Line Terminal 13, wherein the Optical Network Terminal 7,8 is comprising a transceiver 15 having transmitting means 17, being designed to send a first monitoring signal through an optical fiber link 3,4 of the drop section 5, and - receiving means 19, being designed to receive parts of the first monitoring signal reflected within said optical fiber link 3,4 of the drop section 5. The monitoring system, preferably the Optical Network Terminal 7,8, further is comprising failure detecting means 21, being designed to compare signal losses of said optical fiber link 3,4 of the drop section 5 calculated from a signal strength of said received parts of the first monitoring signal to a drop section fiber reference signal loss value and to decide whether a failure of said optical fiber link of the drop section has occurred depending of a result of the comparison.

## Claims

1. A method for monitoring an Optical Distribution Network, comprising the steps of
- sending a first monitoring signal, preferably an Optical Time Domain Reflectometry Signal, by transmitting means (17) of a transceiver (15) of an end user Optical Network Terminal (7,8) through an optical fiber link (3,4) of a drop section (5) backwards a passive distribution node (1) of said Optical Distribution Network,
- receiving parts of the first monitoring signal reflected within the optical fiber link (3,4) of the drop section (11) by receiving means (19) of said end user Optical Network Terminal (7,8), and
- comparing signal losses of said optical fiber link (3,4) of the drop section (5) calculated from a signal strength of said received parts of the first monitoring signal to a drop section fiber reference signal loss value and deciding whether a failure of said optical fiber link (3,4) of the drop section (5) has occurred depending on a result of the comparison preferably by said end user Optical Network Terminal (8).

2. The method according to claim 1, **characterised in that** the steps of
- sending a second monitoring signal, preferably an Optical Time Domain Reflectometry Signal, by transmitting means (32) of a transceiver (30) of an Optical Line Terminal (13) through an optical fiber link (9) of a feeder section (11) up to said passive distribution node (1), and
- receiving parts of the second monitoring signal reflected within the Optical Distribution Network by receiving means of said Optical Line Terminal (13), are performed,
preferably wherein the step of comparing signal losses of said optical fiber link (9) of the feeder section (11) calculated from a signal strength of said received parts of the second monitoring signal to a feeder section fiber reference signal loss value and deciding whether a failure of said optical fiber link of the feeder section has occurred depending on a result of the comparison, is performed preferably by said Optical Line Terminal (13).

3. The method according to claim 2, **characterised in that** said parts of the first monitoring signal reflected within the optical fiber link (3,4) of the drop section (5), received by said receiving means (19) of said end user Optical Network Terminal (7,8) and said received parts of the second monitoring signal are combined mathematically preferably by said Optical Line Terminal (13).

4. The method according to claim 1, **characterised in that** said result is transmitted from said end user Optical Network Terminal (7,8) to an Optical Line Terminal (13) by sending said result via an operational optical link of said Optical Distribution Network.

5. A monitoring system of an optical distribution network comprising at least one passive distribution node (1) and optical fiber links (3,4) of a drop section (5) backwards said passive distribution node (1) and at least one optical fiber link (9) of a feeder section (11) up to said passive distribution node (1),
the monitoring system comprising at least one end user Optical Network Terminal (7,8) and at least one Optical Line Terminal (13),
wherein the Optical Network Terminal (7,8) is comprising
- a transceiver (15) having transmitting means (17), being designed to send a first monitoring signal through an optical fiber link (3,4) of the drop section (5), and
- receiving means (19), being designed to receive parts of the first monitoring signal reflected within said optical fiber link (3,4) of the drop section (5),
wherein the monitoring system, preferably the Optical Network Terminal (7,8), further is comprising failure detecting means (21), being designed to compare signal losses of said optical fiber link (3,4) of the drop section (5) calculated from a signal strength of said received parts of the first monitoring signal to a drop section fiber reference signal loss value and to decide whether a failure of said optical fiber link of the drop section has occurred depending of a result of the comparison.

6. The monitoring system of an optical distribution network according to claim 5, **characterised in that** said Optical Line Terminal (13) is comprising
- a transceiver (30) having transmitting means (32), being designed to send a second monitoring signal through an optical fiber link (9) of the feeder section (11), and
- receiving means (34), being designed to receive parts of the second monitoring signal reflected within the Optical Distribution Network,
and preferably
failure detecting means (36), being designed to compare signal losses of said optical fiber link (9) of the feeder section (11) calculated from a signal strength of said received parts of the second monitoring signal to a feeder section fiber reference signal loss value and to decide whether a failure of said optical fiber link (9) of the feeder section (11) has occurred depending on a result of the comparison.

7. The monitoring system of an optical distribution network according to claim 6, **characterised** preferably in that said Optical Line Terminal (13) is comprising analysing means, being designed to combine the parts of the first monitoring signal and said received parts of the second monitoring signal mathematically.

8. The monitoring system of an optical distribution network according to claim 5, **characterised in that** the monitoring system is being designed to transmit said result from said end user Optical Network Terminal (7,8) to said Optical Line Terminal (13), wherein said transmitting means (17) of the transceiver (15) of said end user Optical Network Terminal (7,8) is being designed to send said result via an operational optical link of said Optical Distribution Network.

9. The monitoring system of an optical distribution network according to claim 5, **characterised in that** said transceiver (15) of said Optical Network Terminal (7,8) and/or said Optical Line Terminal (13) is comprising an optical coupler (40), preferably a tap coupler, being designed to direct at least parts of received parts of a monitoring signal reflected within an optical fiber link to said receiving means (19,34), preferably wherein the receiving means are being designed to receive communication data.

10. The monitoring system of an optical distribution network according to claim 9, **characterised in that** said optical coupler (40) is comprising a partially transparent dielectric mirror.
